# EUROPÄISCHE PATENTSCHRIFT

(11) **EP 3 395 457 B1**
(45) Veröffentlichungstag und Bekanntmachung des Hinweises auf die Patenterteilung: **20.09.2023**
(21) Anmeldenummer: 18169437.3
(22) Anmeldetag: 26.04.2018
(51) Int. Cl.: B09B 3/00, B09B 5/00, C04B 18/08

(54) **VERFAHREN ZUR BEHANDLUNG UND DEKONTAMINATION VON FLUGASCHE**
METHOD FOR THE TREATMENT AND DECONTAMINATION OF FLY ASH
PROCÉDÉ DE TRAITEMENT ET DE DÉCONTAMINATION DE CENDRE VOLANTE

(30) Priorität: 27.04.2017 AT 1752017
(43) Veröffentlichungstag der Anmeldung: 31.10.2018
(73) Patentinhaber: Wiener Kommunal- Umweltschutzprojektgesellschaft mbH, 1110 Wien (AT); Wien Energie GmbH, 1030 Wien (AT)
(72) Erfinder: HUBER, Florian, 1230 Wien (AT); BLASENBAUER, Dominik, 1030 Wien (AT)
(74) Vertreter: Ellmeyer, Wolfgang

(56) Entgegenhaltungen:
- EP-A1- 0 389 328
- DE-A1- 10 109 903
- DE-A1-102014 006 630
- US-A- 4 472 198

## Beschreibung

Die vorliegende Erfindung betrifft die Aufbereitung und insbesondere die Dekontamination von Flugasche durch eine erneute thermische Behandlung des aufbereiteten Materials. STAND DER TECHNIK US-A-4472198 zeigt einen bekannten Stand der Technik. Derzeit werden staub- bzw. teilchenförmige Verbrennungsrückstände aus der Müllverbrennung, hierin kollektiv als "Flugasche" bezeichnet, entweder mit Zement stabilisiert und anschließend auf einer Reststoffdeponie entsorgt oder auch ohne Vorbehandlung auf einer Untertagedeponie für gefährliche Abfälle entsorgt. Colangelo et al. (J. Hazard. Mater. 299, 181-191 (2015)) offenbaren eine zweistufige Pelletierung von Flugasche, wobei zunächst eine erste Pelletierung unter Verwendung von Zement, Kalk und Kohlenflugasche als Bindemittelsystem und danach eine zweite Pelletierung unter alleiniger Verwendung von Zement als Bindemittel, jeweils auf einem rotierenden Pelletierteller, durchgeführt werden, um die Flugasche in einem von einer Zementhülle umgebenen Kern zu binden. Derartige Pellets sollen zur Verwendung als Baustoffzusätze zu Beton und dergleichen geeignet sein, wodurch sich die Deponierung erübrigt. Derartige Lösungsansätze sind allerdings mit hohen Kosten verbunden, auch weil für die Stabilisierung große Mengen an Zement erforderlich sind, dessen Herstellung mit hohem Energieverbrauch und bedeutenden Umweltauswirkungen verbunden ist. Zudem erfolgt keinerlei Dekontamination, was vom Umweltstandpunkt aus höchst problematisch ist. Die Patentanmeldung WO 2004/085083 A1 beschreibt ein Verfahren zur Behandlung von staubförmigen Abfallgütern. Diese werden vorkonfektioniert und anschließend dem so genannten "Thermoselect"-Recyclingverfahren zugeführt. Bei der Vorkonfektionierung, die durch Pelletierung, Strangpressen, Brikettierung, Suspendieren bzw. Dispergieren und gegebenenfalls unter Zusatz von Bindemitteln erfolgen kann, werden vorzugsweise Thermoplasten und/oder schwerölhaltige oder ähnliche heizwertebereiche Bindemittel eingesetzt, die beim Erhitzen zum sofortigen Zerfall des vorkonfektionierten Abfallguts führen. Dadurch wird ein deutlich verbesserter Wärmeertrag erzielt. Die beim Zerfall entstehenden Partikel werden im "Thermoselect"-Hochtemperaturreaktor in die dort vorliegende Schmelze eingebunden. Allerdings ist eine derartige Vorkonfektionierung, bei der das Risiko besteht, dass das vorkonfektionierte Abfallgut beim Erhitzen zerfällt, nicht für die Behandlung von staubförmigen Abfällen in Müllverbrennungsanlagen mit Rostfeuerung, Drehrohrfeuerung oder Wirbelschichtfeuerung geeignet, da hier wesentlich geringere Temperaturen vorliegen und die Asche daher keine Schmelze bildet. Die beim Zerfall des vorkonfektionierten Abfallguts entstehenden Partikel würden daher mit dem Rauchgasstrom ausgetragen und (erneut) als Teil der Flugasche abgeschieden werden.

Koralweska (R. Koralweska, "Verfahren zur Inertisierung von Aschen/Schlacken aus der Rostfeuerung" in: Aschen, Schlacken, Stäube aus Abfallverbrennung und Metallurgie, S. 423-435, TK-Verlag, Neuruppin (2013)) beschreibt ein Verfahren, bei dem ein Teil der in einer Müllverbrennungsanlage entstehenden Flugasche in den Müllbunker zurückgeführt wird. Auch hier erfolgt die Einbindung der Flugasche durch die außerordentlich hohen Temperaturen des Brennbetts (> 1.150 °C), wobei keine Vorkonfektionierung erfolgt. Die hohe Temperatur wird durch die Kombination aus Sauerstoffanreicherung der Verbrennungsluft und Abgasrezirkulation erreicht.

Auch die vorliegenden Erfinder haben bereits ein Verfahren zur thermischen Behandlung von Flugasche aus der Müllverbrennung zusammen mit brennbaren gefährlichen Abfällen in einem Drehrohrofen beschrieben (Huber et al., Waste Management 58, 181-190 (2016)). Dabei wird die Flugasche vorbereitend mit Wasser befeuchtet, um Staubemissionen während des Transports zu vermeiden. Bei dieser Vorbehandlung besteht allerdings ein hohes Risiko für unerwünschte Klumpenbildung, und die Temperatur im Müllbunker steigt als Folge der chemischen Reaktion zwischen Flugasche und Wasser an. Aufgrund dieser Nachteile ist eine sichere und kontinuierliche Beschickung des Drehrohrofens mit befeuchteter Flugasche nur schwer möglich.

Somit ermöglicht keines der oben beschriebenen Verfahren eine sichere Dekontamination durch kontinuierliche thermische Behandlung von Flugasche bei Temperaturen, wie sie in der Rostfeuerung, Wirbelschichtfeuerung oder in einem Drehrohrofen üblicherweise eingesetzt werden.

Ziel der Erfindung war daher, die beschriebenen Nachteile des Standes der Technik zu überwinden und ein alternatives Verfahren zur Behandlung von staubförmigen Verbrennungsrückständen, insbesondere zur Dekontamination von Flugasche zu entwickeln.

### OFFENBARUNG DER ERFINDUNG

Dieses Ziel erreicht die vorliegende Erfindung durch Bereitstellung eines Verfahrens zur Behandlung und Dekontamination von Flugasche, umfassend die folgenden Schritte:
a) Vermischen der Flugasche mit 5 bis 20 Gew.-% Wasser, im Wesentlichen ohne Zusatz sonstiger Bindemittel;
b) Agglomeration des dabei erhaltenen Gemischs mittels Pelletieren oder Formpressen;
c) Altern des dabei erhaltenen Agglomerats für einen Zeitraum, nach dem eine solche Festigkeit erzielt wurde, dass der Gewichtsverlust der Trockensubstanz des Agglomerats bei der anschließenden Wärmebehandlung in Schritt d) nicht mehr als 20 Gew.-% beträgt;
d) Wärmebehandlung des so gealterten Materials bei einer Temperatur > 80 °C zur Zerstörung organischer Verbindungen und zur Entfernung flüchtiger Schwermetalle; und
e) gegebenenfalls Versetzen des wärmebehandelten Materials mit Wasser.

Durch ein solches Verfahren gemäß vorliegender Erfindung können mit geringem Material- und apparativem Aufwand und auf kostengünstige Weise aus Flugasche oder anderen staub- oder teilchenförmigen Abfallprodukten von Verbrennungsvorgängen sowie Wasser, d.h. ohne Zusatz sonstiger Bindemittel, Agglomerate mit hoher Stabilität und Festigkeit hergestellt werden, die während der erfindungsgemäßen erneuten Wärmebehandlung des Materials ihre Struktur im Wesentlichen beibehalten und in der Folge, gegebenenfalls nach einer abschließenden Wasserbehandlung, problemlos deponierbar sind.

Mit "im Wesentlichen ohne Zusatz sonstiger Bindemittel" ist gemeint, dass es gemäß vorliegender Erfindung nicht erforderlich ist, Bindemittel wie Zement und dergleichen zuzusetzen, da bei geeigneter Wahl der Wassermenge die Festigkeit der in Schritt b) erhaltenen Agglomerate für die weitere Behandlung ausreicht. Dabei ist unter "Bindemittel" jegliches Material zu verstehen, das den Zusammenhalt der gebildeten Agglomerate fördert, wie z.B. Wasser, Zement, Kalk usw. Allerdings können in Spezialfällen, abhängig von der Zusammensetzung der Flugasche, auch geringe Anteile an Bindemitteln zugesetzt werden, um die Agglomerate zusätzlich zu stabilisieren. Deren Anteil sollte jedoch möglichst gering gehalten werden, um die Austragbarkeit von Schwermetallen oder dergleichen während der Wärmebehandlung in Schritt d) nicht nennenswert zu beeinträchtigen, d.h. auf Mengen von nicht mehr als 5 Gew.-%, vorzugsweise nicht mehr als 3 Gew.-% und insbesondere nicht mehr als 1 Gew.-%, an Bindemittel begrenzt werden.

Der Erhalt der Agglomerate in Schritt b) erfolgt durch Pelletieren oder Formpressen. Vorzugsweise werden sie auf wirtschaftliche Weise mittels Aufbauagglomeration hergestellt. Unter Aufbauagglomeration werden allgemein - im Gegensatz zur Pressagglomeration - Verfahren des Feuchtgranulierens verstanden, wobei ein Pulver mit einer geeigneten Flüssigkeitsmenge so vermischt wird, dass sich Bindungen zwischen den Partikeln bilden können. Einzelne Partikel oder bereits gebildete kleine Agglomerate werden durch Bewegung und Befeuchtung mit dem gewählten flüssigen Bindemittel aneinander angelagert. Besonders bevorzugt werden zu diesem Zweck Agglomerationsverfahren unter Verwendung eines Pelletiertellers oder einer Pelletiertrommel eingesetzt, die sich durch ein besonders geringes Verschleiß- und Korrosionsrisiko auszeichnen. Dabei kann gemäß vorliegender Erfindung das Vermischen mit Wasser auch erst im Wesentlichen gleichzeitig mit der Pelletierung, d.h. direkt auf dem Pelletierteller oder in der Pelletiertrommel, erfolgen.

Wesentlich ist gemäß vorliegender Erfindung, dass die Flugasche in Schritt a) mit 5 bis 20 Gew.-%, vorzugsweise mit 10 bis 20 Gew.-%, insbesondere mit 14 bis 16 Gew.-%, Wasser vermischt wird, da das Gemisch bei Wasseranteilen über 20 Gew.-% zum Verklumpen oder Verschlammen neigt und keine strukturstabilen Agglomerate, wie z.B. Pellets, erhalten werden können. Andererseits finden erst ab etwa 5 Gew.-% Wasseranteil nennenswerte Abbindereaktionen statt, so dass unter dieser Grenze keine ausreichende Festigkeit der Agglomerate erzielbar ist. Weiters kann bei Wasseranteilen unter 10 Gew.-% mitunter zu wenig Bindemittel vorhanden sein, um Agglomerate geeigneter Größe bilden zu können, und außerdem ist in Abhängigkeit von Art der verwendeten Flugasche mitunter die Festigkeit dieser Agglomerate für die weitere Behandlung noch immer unzureichend. Die optimale Menge hängt von der Zusammensetzung der jeweils eingesetzten Flugasche ab.

Diese erfindungsgemäße Auswahl des Wassergehalts stellt sicher, dass es bei der Agglomeration zu keinerlei Staubemissionen kommt, dass Agglomerate mit definierten Formen entstehen und dass bei der späteren Wärmebehandlung des agglomerierten Materials möglichst wenig Energie verbraucht wird.

Unter "Alterung" ist hierin das Ruhenlassen der in Schritt b) erhaltenen Agglomerate zu verstehen, um die darin ablaufenden Abbindevorgänge, insbesondere jene hydraulischer Natur unter Reaktion des zugesetzten Wassers, ungestört ablaufen zu lassen - mit dem Ziel, die Festigkeit der Agglomerate auf für die weitere Behandlung ausreichende Werte zu erhöhen. In manchen Ausführungsformen können die Agglomerate während des Alterns in Schritt c) vorzugsweise erwärmt oder gekühlt oder nacheinander sowohl erwärmt als auch gekühlt, z.B. zunächst erwärmt und danach gekühlt (oder umgekehrt), werden, um während der Alterungsphase in möglichst kurzer Zeit ein möglichst vollständiges Abbinden des Wasseranteils der Agglomerate zu erzielen. So hat es sich beispielsweise als vorteilhaft erwiesen, wenn die Agglomerate während bzw. am Ende des Alterns in Schritt c) auf nicht mehr als 80 °C, vorzugsweise nicht mehr als 50 °C, noch bevorzugter nicht mehr als 30 °C, erwärmt bzw. gekühlt werden. Die optimale Temperatur hängt unter anderem davon ab, in welchen Anteilen die jeweilige Flugasche Komponenten enthält, die durch Reaktion mit H₂O, d.h. hydraulisch, oder mit CO₂ unter Ausbildung von Carbonaten abbinden, wie z.B. Calciumoxid und dergleichen. Wesentlich ist auch, dass einerseits bei einem späteren Kontakt mit Feuchtigkeit keine weitere Reaktion mehr auftritt und andererseits die Festigkeit des agglomerierten Materials nach der Alterung höher als davor ist. Dies hat den Vorteil, dass das gealterte Material später mit feuchten Abfällen oder anderen feuchten Materialen in Verbindung gebracht werden kann, ohne dass es zu weiteren Reaktionen kommt, z.B. bei einer Wärmebehandlung des Materials zusammen mit anderen brennbaren und mitunter eben feuchten Abfällen.

Auch die Dauer der Alterung hängt natürlich von der Zusammensetzung der Flugasche ab, wobei gemäß vorliegender Erfindung die Alterung der Agglomerate in Schritt c) für einen Zeitraum durchgeführt wird, nach dem eine solche Festigkeit der Agglomerate erzielt wurde, dass der Gewichtsverlust der Agglomerate, genauer gesagt der Trockensubstanz derselben, bei der anschließenden Wärmebehandlung in Schritt d) nicht mehr als 20 Gew.-%, vorzugsweise nicht mehr als 10 Gew.-%, noch bevorzugter nicht mehr als 5 Gew.-%, beträgt. Dadurch wird verhindert, dass bei der Wärmebehandlung nennenswerte Mengen der Flugasche zusammen mit dem Abgasstrom ausgetragen werden. Wie lange die Alterung bei einer vorgegebenen Zusammensetzung der Flugasche und einer gegebenen Temperatur der Alterung vorzugsweise dauern sollte, ist für den Fachmann durch einfache Routineexperimente leicht zu ermitteln, wobei im Einzelfall eine Dauer von zumindest 1 h, zumindest 12 h, zumindest 1 d, zumindest 3 d und mitunter auch von zumindest 5 d erforderlich sein kann.

Die Wärmebehandlung in Schritt d) dient zur Zerstörung von eventuell noch in der Flugasche vorhandenen organischen Verbindungen sowie zur Entfernung etwaiger enthaltener flüchtiger Schwermetalle, wie z.B. Quecksilber oder Cadmium. Diese gehen teilweise in den Abgasstrom über und können in einer Müllverbrennungsanlage als Teil der Flugasche oder des Filterkuchens ausgeschleust werden. Zu diesem Zweck wird die Wärmebehandlung vorzugsweise bei Temperaturen von zumindest 450 °C, noch bevorzugter zumindest 650 °C, noch bevorzugter zumindest 850 °C, noch bevorzugter bei 850 bis 1150 °C, durchgeführt. Insbesondere wird die Wärmebehandlung in Schritt d) bei Temperaturen durchgeführt, bei denen es zur zumindest teilweisen Sinterung von Komponenten der Flugasche kommt, was die Festigkeit der Agglomerate weiter erhöht und einen Materialaustrag zusammen mit dem Abgasstrom wirksam unterdrückt.

Die Wärmebehandlung kann gemäß vorliegender Erfindung vorzugsweise in einer Rostfeuerung, einer Wirbelschichtfeuerung oder in einem Drehrohrofen durchgeführt werden, die üblicherweise bei der Müllverbrennung zum Einsatz kommen, insbesondere in einer Rostfeuerung, da sich hier die festigkeitssteigenden Schritte des erfindungsgemäßen Verfahrens besonders vorteilhaft auswirken.

Das Verfahren gemäß vorliegender Erfindung umfasst nach der Wärmebehandlung den optionalen abschließenden Schritt e) des Versetzens des wärmebehandelten Materials mit Wasser, um es abzukühlen bzw. abzuschrecken und/oder um etwaige darin enthaltene lösliche Komponenten daraus zu extrahieren, wie z.B. leicht löslicher Chloride oder dergleichen. Zu diesem Zweck kann beispielsweise ein herkömmlicher Nassentschlacker zum Einsatz kommen.

Durch dieses Verfahren der vorliegenden Erfindung wird schlussendlich ein Material erhalten, das aufgrund der Festigkeit der Agglomerate kein Risiko für Staubemissionen durch Aufwirbeln mehr darstellt und das eine wesentlich geringere Konzentration an organischen Schadstoffen, Schwermetallen und leicht löslichen Salzen aufweist, als die ursprüngliche Flugasche. Die Entsorgung des derart behandelten Materials gestaltet sich aufgrund der erhaltenen Eigenschaften somit wesentlich einfacher, als bei dem unbehandelten staubförmigen Material. So kann das erhaltene Material beispielsweise ohne weitere Stabilisierung oder Verfestigung auf einer obertägigen Deponie abgelagert werden. Im direkten Vergleich zu den Verfahren nach dem Stand der Technik ermöglicht das erfindungsgemäße Verfahren darüber hinaus deutliche Einsparungen an Energie- und sonstigen Verfahrenskosten.

### BEISPIELE

Von einer Hausmüllverbrennungsanlage stammende Flugasche wurde mittels eines Staubdosierers auf einen mit 25 U/min rotierenden Pelletierteller aufgebracht. Zusätzlich wurde Wasser als Bindemittel mit variierenden Anteilen von 5, 10, 14, 16, 24 und 26 Gew.-% zugemischt. Dadurch wurden Pellets mit variierenden mittleren Größen erhalten, wobei insbesondere Größen zwischen 5 und 15 mm als geeignet anzusehen sind. Bei Wasseranteilen von 24 und 26 Gew.-% konnte allerdings keine bzw. keine zufrieden stellende Pelletbildung beobachtet werden, da das befeuchtete Material am Pelletierteller verschlammte. Bei Wasseranteilen von 5 und 10 Gew.-% konnte auch keine zufrieden stellende Pelletbildung beobachtet werden, da nur wenig Bindemittel vorhanden war und somit nur sehr kleine Pellets mit Durchmessern von unter 5 mm entstanden, was nicht zu bevorzugen ist. Bei 5 Gew.-% Wasseranteil waren zudem der Zusammenhalt und damit die Formstabilität der Pellets äußerst gering, weswegen ein so geringer Wasseranteil zwar prinzipiell möglich ist, da nichtsdestotrotz Agglomerate erhältlich sind, in der Praxis jedoch wohl in den meisten Fällen als unzureichend anzusehen sein wird.

**Tabelle 1 - Pelletierung**

| | Wasseranteil [Gew.-%] | ∅ Pellets [mm] |
|---|---|---|
| Beispiel 1 | 5 | < 5 |
| Beispiel 2 | 10 | < 5 |
| Beispiel 3 | 14 | 10 |
| Beispiel 4 | 16 | 10 |
| Vergleichsbeispiel 1 | 24 | n.b. |
| Vergleichsbeispiel 2 | 26 | n.b. |

Bei Versuchen mit Prüflingen mit verschiedenen Flugasche/Wasser-Mischungsverhältnissen zwischen 5 und 20 Gew.-% Wasser, die mit einer Presse mit Druck beaufschlagt wurden, bis es zum Bruch der Prüflinge kam, hat sich gezeigt, dass bei einem Wassergehalt von 5 Gew.-% nur eine Festigkeit von etwa 10 N/cm² und bei 10 Gew.-% nur eine Festigkeit von etwa 20 N/cm² erzielbar waren, wobei letzterer Wert die Untergrenze für die spätere Handhabung und Behandlung der Pellets darstellte, während mit höheren Wassergehalten sogar Festigkeiten bis zu 75 N/cm² erzielt wurden.

Die oben erhaltenen Pellets der Beispiele 2 bis 4 wurden in BigBag-Säcken bei Raumtemperatur mehrere Wochen lang altern gelassen und daraufhin in einem Drehrohrofen bei Temperaturen von 450-1050 °C für eine Dauer zwischen 10 und 60 min wärmebehandelt, wobei ein Luftvolumenstrom von etwa 1 Nm³/kg Flugasche in den Drehrohrofen eingeblasen und der Anteil der zusammen mit dem Luftstrom ausgetragenen Feststoffe als "Massenverlust" bestimmt wurde.

**Tabelle 2 - Massenverlust**

| | Temperatur [°C] | Anteil der ausgetragenen Feststoffe [Gew.-%] |
|---|---|---|
| Beispiel 5 | 450 | 0,075 |
| Beispiel 6 | 550 | 0,088 |
| Beispiel 7 | 650 | 0,066 |
| Beispiel 8 | 750 | 0,067 |
| Beispiel 9 | 850 | 0,325 |
| Beispiel 10 | 950 | 0,936 |
| Beispiel 11 | 1050 | 1,479 |

Bei diesen Versuchen hat sich zudem gezeigt, dass der Anteil der ausgetragenen Feststoffe nur von der Temperatur, nicht aber von der Dauer der Wärmebehandlung abhängig war.

Während dieser Wärmebehandlung blieben die Pellets durchwegs formstabil, so dass diese erfindungsgemäß erzeugten und behandelten Pellets somit deutlich besser für eine spätere Deponierung geeignet waren als die ursprüngliche Flugasche - und auch als vergleichbare, aus dem Stand der Technik bekannten Produkte -, weswegen das Verfahren der vorliegenden Erfindung einen bedeutenden Beitrag auf dem Gebiet der Dekontamination von Flugasche und ähnlichen staub- bzw. teilchenförmigen Verbrennungsrückständen leistet.

## Patentansprüche

1. Verfahren zur Behandlung und Dekontamination von Flugasche, umfassend die folgenden Schritte:
a) Vermischen der Flugasche mit 5 bis 20 Gew.-% Wasser, im Wesentlichen ohne Zusatz sonstiger Bindemittel;
b) Agglomeration des dabei erhaltenen Gemischs mittels Pelletieren oder Formpressen;
c) Altern des dabei erhaltenen Agglomerats für einen Zeitraum, nach dem eine solche Festigkeit erzielt wurde, dass der Gewichtsverlust der Trockensubstanz des Agglomerats bei der anschließenden Wärmebehandlung in Schritt d) nicht mehr als 20 Gew.-% beträgt;
d) Wärmebehandlung des so gealterten Materials bei einer Temperatur > 80 °C zur Zerstörung organischer Verbindungen und zur Entfernung flüchtiger Schwermetalle; und
e) gegebenenfalls Versetzen des wärmebehandelten Materials mit Wasser.

2. Verfahren nach Anspruch 1, **dadurch gekennzeichnet, dass** die Flugasche in Schritt a) mit 10 bis 20 Gew.-% Wasser vermischt wird.

3. Verfahren nach Anspruch 2, **dadurch gekennzeichnet, dass** die Flugasche in Schritt a) mit 14 bis 16 Gew.-% Wasser vermischt wird.

4. Verfahren nach einem der Ansprüche 1 bis 3, **dadurch gekennzeichnet, dass** die Agglomeration in Schritt b) durch Pelletieren unter Verwendung eines Pelletiertellers oder einer Pelletiertrommel durchgeführt wird.

5. Verfahren nach einem der Ansprüche 1 bis 4, **dadurch gekennzeichnet, dass** das Agglomerat während des Alterns in Schritt c) erwärmt, gekühlt oder nacheinander sowohl erwärmt als auch gekühlt wird.

6. Verfahren nach Anspruch 5, **dadurch gekennzeichnet, dass** das Agglomerat während bzw. am Ende des Alterns in Schritt c) auf nicht mehr als 80 °C, vorzugsweise nicht mehr als 50 °C, noch bevorzugter nicht mehr als 30 °C, erwärmt bzw. gekühlt wird.

7. Verfahren nach einem der Ansprüche 1 bis 6, **dadurch gekennzeichnet, dass** der Gewichtsverlust bei der Wärmebehandlung in Schritt d) nicht mehr als 10 Gew.-% beträgt.

8. Verfahren nach Anspruch 7, **dadurch gekennzeichnet, dass** der Gewichtsverlust bei der Wärmebehandlung in Schritt d) nicht mehr als 5 Gew.-% beträgt.

9. Verfahren nach einem der Ansprüche 1 bis 8, **dadurch gekennzeichnet, dass** die Wärmebehandlung in Schritt d) bei Temperaturen von zumindest 450 °C oder zumindest 650 °C oder zumindest 850 °C durchgeführt wird.

10. Verfahren nach Anspruch 9, **dadurch gekennzeichnet, dass** die Wärmebehandlung in Schritt d) bei Temperaturen von 850 °C bis 1150 °C durchgeführt wird.

11. Verfahren nach Anspruch 9 oder 10, **dadurch gekennzeichnet, dass** die Wärmebehandlung in Schritt d) bei Temperaturen durchgeführt wird, bei denen es zur zumindest teilweisen Sinterung von Komponenten der Flugasche kommt.

12. Verfahren nach einem der Ansprüche 1 bis 11, **dadurch gekennzeichnet, dass** die Wärmebehandlung in Schritt d) in einer Rostfeuerung, einer Wirbelschichtfeuerung oder in einem Drehrohrofen durchgeführt wird.

13. Verfahren nach einem der Ansprüche 1 bis 12, **dadurch gekennzeichnet, dass** das wärmebehandelte Material in Schritt e) mit Wasser versetzt wird, um es abzukühlen bzw. abzuschrecken und/oder um lösliche Komponenten zu extrahieren.

## Claims

1. A process for treating and de-contaminating fly ash, comprising the following steps:
a) mixing the fly ash with 5 to 20% by weight of water, substantially without adding any further binders;
b) agglomerating the thus obtained mixture by means of pelletizing or compression molding;
c) ageing the thus obtained agglomerate for a period of time after which such strength has been achieved that the weight loss of the dry matter of the agglomerate, produced in a subsequent heat treatment in step d) amounts to no more than 20% by weight;
d) heat-treating the thus aged material at a temperature of >80°C to destroy organic compounds and to remove volatile heavy metals; and
e) optionally treating the heat-treated material with water.

2. The process according to claim 1, **characterized in that**, in step a), the fly ash is mixed with 10 to 20% by weight of water.

3. The process according to claim 2, **characterized in that**, in step a), the fly ash is mixed with 14 to 16% by weight of water.

4. The process according to any one of the claims 1 to 3, **characterized in that**, in step b), said agglomeration is achieved by pelletizing using a pelletizing disk or a pelletizing drum.

5. The process according to any one of the claims 1 to 4, **characterized in that**, in the course of the ageing process in step c), the agglomerate is heated, cooled or both heated and cooled successively.

6. The process according to claim 5, **characterized in that**, in the course or at the end of the ageing process in step c), the agglomerate is heated or cooled to no more than 80°C, preferably to no more than 50°C, more preferably to no more than 30°C.

7. The process according to any one of the claims 1 to 6, **characterized in that** the weight loss during the heat treatment in step d) amounts to no more than 10% by weight.

8. The process according to claim 7, **characterized in that** the weight loss during the heat treatment in step d) amounts to no more than 5% by weight.

9. The process according to any one of the claims 1 to 8, **characterized in that** the heat treatment in step d) is carried out at temperatures of at least 450°C or at least 650°C or at least 850°C.

10. The process according to claim 9, **characterized in that** the heat treatment in step d) is carried out at temperatures of 850°C to 1,150°C.

11. The process according to claim 9 or claim 10, **characterized in that** the heat treatment in step d) is carried out at temperatures at which components of the fly ash are at least partially sintered.

12. The process according to any one of the claims 1 to 11, **characterized in that** the heat treatment in step d) is carried out in a grate firing, a fluidized-bed firing, or in a rotary kiln.

13. The process according to any one of the claims 1 to 12, **characterized in that**, in step e), the heat-treated material is treated with water in order to cool or quench it and/or to extract any soluble components.

## Revendications

1. Procédé de traitement et de décontamination des cendres volantes, comprenant les étapes suivantes:
a) mélanger des cendres volantes avec 5 à 20 % en poids d'eau, essentiellement sans ajout de liants supplémentaires;
b) agglomérer le mélange ainsi obtenu par bouletage ou moulage par compression;
c) le vieillissement de l'agglomérat ainsi obtenu pendant une période de temps après laquelle une telle résistance a été atteinte que la perte de poids de la substance sèche de l'agglomérat lors d'un traitement thermique ultérieur à l'étape d) ne représente pas plus de 20 % en poids;
d) le traitement thermique de la matière ainsi vieillie à une température supérieure à 80°C pour détruire les composés organiques et éliminer les métaux lourds volatils; et
e) le cas échéant, le traitement à l'eau du matériau traité thermiquement.

2. Procédé selon la revendication 1, **caractérisé en ce que**, à l'étape a), les cendres volantes sont mélangées avec 10 à 20 % en poids d'eau.

3. Procédé selon la revendication 2, **caractérisé en ce que**, à l'étape a), les cendres volantes sont mélangées avec 14 à 16 % en poids d'eau.

4. Procédé selon l'une des revendications 1 à 3, **caractérisé en ce que**, à l'étape b), l'agglomération est obtenue par bouletage en utilisant une plaque de bouletage ou un tambour de bouletage.

5. Procédé selon l'une des revendications 1 à 4, **caractérisé en ce que**, au cours du vieillissement à l'étape c), l'agglomérat est chauffé, refroidi ou chauffé et refroidi successivement.

6. Procédé selon la revendication 5, **caractérisé en ce que**, au cours ou à la fin du vieillissement à l'étape c), l'agglomérat est chauffé ou refroidi à pas plus de 80°C, de manière préférée à pas plus de 50°C, de manière plus préférée à pas plus de 30°C.

7. Procédé selon l'une des revendications 1 à 6, **caractérisé en ce que** la perte de poids pendant le traitement thermique à l'étape d) ne dépasse pas 10 % en poids.

8. Procédé selon la revendication 7, **caractérisé en ce que** la perte de poids pendant le traitement thermique à l'étape d) ne dépasse pas 5 % en poids.

9. Procédé selon l'une des revendications 1 à 8, **caractérisé en ce que** le traitement thermique à l'étape d) est effectué à des températures d'au moins 450°C ou d'au moins 650°C ou d'au moins 850°C.

10. Procédé selon la revendication 9, **caractérisé en ce que** le traitement thermique à l'étape d) est effectué à des températures de 850°C à 1150°C.

11. Procédé selon la revendication 9 ou la revendication 10, **caractérisé en ce que** le traitement thermique à l'étape d) est effectué à des températures auxquelles les composants des cendres volantes sont au moins partiellement frittés.

12. Procédé selon l'une des revendications 1 à 11, **caractérisé en ce que** le traitement thermique à l'étape d) est effectué dans un foyer à grille, un foyer à lit fluidisé ou un four à chambre tournante.

13. Procédé selon l'une des revendications 1 à 12, **caractérisé en ce que** le matériau traité thermiquement est traité avec de l'eau à l'étape e) afin de le refroidir ou de le tremper et/ou d'extraire des composants solubles.
